# EUROPEAN PATENT SPECIFICATION

(11) **EP 3 188 932 B1**
(45) Date of publication and mention of the grant of the patent: **03.04.2019**
(21) Application number: 15767385.6
(22) Date of filing: 08.09.2015
(51) Int. Cl.: B60R 9/06, B60R 9/10

(54) **BIKE CARRIER**
FAHRRADTRÄGER
PORTE-VÉLO

(30) Priority: 05.09.2014 US 201462046614 P
(43) Date of publication of application: 12.07.2017
(73) Proprietor: Cequent Performance Products, Inc., Plymouth, MI 48170 (US)
(72) Inventor: WALKER, Mark Andrew, Royal Oak, Michigan 48073 (US); LAURER, Austin Jon, Canton, Michigan 48187 (US)
(74) Representative: Müller-Boré & Partner Patentanwälte PartG mbB
(86) International application number: PCT/US2015/048874
(87) International publication number: WO 2016/037173

(56) References cited:
- US-A- 5 862 966
- US-A1- 2006 029 483
- US-A1- 2011 011 909

## Description

### TECHNICAL FIELD

The present invention relates to a bicycle carrier and more particularly, to hitch mounted type bike carrier that is scalable and adjustable.

### BACKGROUND

Bicycle carrier equipment may include various configurations of rail members, arms, and fasteners designed to assist a user to stabilize a bicycle on a vehicle for storage or transport. Conventional bicycle carrier equipment can be roof mounted, trunk mounted or hitch mounted to the vehicle. These carriers include various fastening systems to secure the bike to the carrier and various fastening systems to secure the carrier to the vehicle.

A disadvantage of these bike carriers, however, is that they are generally bulky and take up a lot of space either on the roof or rear portion of the vehicle. Additionally, hitch mounted bike carriers for multiple bikes take up a large relative amount of space that is undesirable for the user when the carriers are not being utilized to transport or store bicycles.

Hitch mounted bike carriers that extend from the rear of a vehicle, however, often result in making the vehicle more difficult to park, maneuver, and the like. This may result in the bikes and bike carriers needing to either be moved or removed from the vehicle in order to park or effectively maneuver the vehicle. This, however, can be time consuming and may require the bike carrier to be stored, which may not be feasible and is not likely preferred.

Current bike carriers often are limited by the size of the bike which can be operatively attached with such bike carrier. If the bike does not fit, these bike carriers typically provide no adjustability. Known bike carriers may also suffer from a large number of disadvantages which make it inconvenient for a user to transport or store at least one bike thereon. For example, current bike carriers can only carry a predetermined number of bikes. They do not have the ability to expand or reduce the number of bikes that are operatively attachable thereto. If a user wishes to carry three bikes, the user may need to have a bike carrier that can carry at least three bikes, such as a four bike carrier. This may require a user to purchase a bike carrier that exceeds his or her needs or may require a user to purchase a plurality of bike carriers to meet the needs of carrying a different number of bikes.

Therefore, there is a need for a bike carrier that is capable of transporting or storing multiple bikes that is easy to configure in a more compact position during non-use and to expand and/or retract the capability thereof. In view thereof, there exists a need for a bike carrier of such design that it affords a solution which overcomes the disadvantages of previously known bike carriers.

US 2011/011909 A1 discloses a bicycle carrier including a mounting base, a main frame mounted on and movable relative to the mounting base, two limit pins each mounted between the main frame and the mounting and a positioning pin mounted on the main frame and detachably locked onto the mounting base. The main frame includes a main tube movably mounted on the mounting base, a plurality of support tubes mounted on the main tube and a plurality of adjusting tubes adjustably mounted on the support tubes.

US 2006/029483 A1 discloses a ready-to-ride bicycle carrier assembly including a frame having a front portion and a rear portion. The front portion of the frame includes a wheel well configured to support a first wheel of the bicycle. A wheel holder is located at the rear portion of the frame and is configured to support a second wheel of the bicycle. An arm is pivotably connected to the frame, and a gripping member is selectively moveable along a length of the arm. The gripping member is configured to be selectively positioned to secure the bicycle on the carrier.

US 5 862 966 discloses a bicycle platform support having a stationary tire restraint which is welded to one end of a channel rail for restraining one tire of a bicycle within the channel of a channel rail at one end portion thereof. Further included in the bicycle platform support are two moveable tire restraints. The moveable tire restraints are moveable and lockable within a channel rail so as to restrain the tires and thus the bicycle in the channel rail.

### SUMMARY

The present disclosure includes a bike carrier having a longitudinal rail section with a wheel supporting member positioned near a first end and a wheel cradle positioned at an opposite second end for supporting the wheels of a loaded bicycle. A retaining arm is pivotally arranged relative to the longitudinal rail section and is provided with a hook member that is telescopingly attached to the retaining arm. The retaining arm is arranged so that it can be rotated into a support position in which the hook member can be extended or retracted into a position abutted against the frame or the wheel of the loaded bicycle when the loaded bicycle is in an upright position along the bike carrier.

The wheel cradle includes a telescoping rail that is configured to be extended and retracted relative to the longitudinal rail section. A first cradle member has a generally U-shaped cross section and is attached to the telescoping rail and configured to receive a portion of the wheel of the loaded bicycle. A second cradle member has a generally U-shaped cross section and is attached to the longitudinal rail section and configured to receive a portion of the wheel of the loaded bicycle. The first cradle member is longitudinally adjustable by extending and retracting the telescoping rail relative to longitudinal rail. This movement adjusts a positioned the first and second cradle members to abut against opposite portions of the wheel of the loaded bicycle. The wheel cradle and hook member support the loaded bicycle in an upright position.

Additionally, the bike carrier may attach to a hitch receiver, which is attached to an associated vehicle. The hitch receiver often attaches to the frame of the vehicle and may extend immediately below the bumper of the vehicle from the rear thereof. The bike carrier may be attached to a folding mechanism that includes a draw bar that can be selectively attached to the hitch receiver and secured to the vehicle. The folding mechanism is configured to tilt the bike carrier from an in-use position to a storage position.

In another embodiment, the folding mechanism can include a support arm that is configured to support additional bike carriers in a generally scalable arrangement such that a plurality of bike carriers can extend from the hinge mechanism and tilt from the in-use position into the storage position.

In one embodiment, provided is a bike carrier configured to be attached to a vehicle. The bike carrier may include a first rail having a first wheel supporting member positioned at a first end, a second rail, the first and second rails telescopingly engaged, the second rail having a second wheel supporting member positioned at a second end, and a hitch attachment member. The hitch attachment member may be configured to be scalable and support at least one additional rail member such that the additional rail member may extend from the hitch attachment member and be configured to support a bike. A retaining arm may be pivotally arranged relative to the longitudinal rail section and includes a hook member that is telescopingly attached to the retaining arm. The retaining arm may be configured to pivot between a support position and release position and the hook member may be configured to be extended or retracted into a position abutted against the bike when the bike is supported by the bike carrier.

The second wheel supporting member may include a wheel cradle having a first cradle member attached to the telescoping rail and a second cradle member attached to the longitudinal rail. The first cradle member may include a generally U-shaped cross section and may be configured to receive a portion of the wheel of the bike and the second cradle member may have a generally U-shaped cross section and may be configured to receive a portion of the wheel of the bike. The first cradle member is longitudinally adjustable relative to the second cradle member by extending and retracting the telescoping rail relative to longitudinal rail. The hitch attachment member may include a folding mechanism, the folding mechanism may include a draw bar configured to be selectively attached to the hitch receiver and secured to the vehicle wherein the folding mechanism may be configured to tilt the bike carrier from an in-use position to a storage position. The folding mechanism may include a support arm that is configured to support additional rail members in a generally scalable arrangement such that a plurality of bike carriers or rail members can extend from the hitch attachment member and tilt from the in-use position into the storage position. The second rail member or bike carrier may include a support arm configured to be attached to the hitch attachment member.

A third bike carrier or rail member may include a support arm configured to be attached to the support arm of the second bike carrier. At least one of the first wheel supporting member and the second wheel supporting member may be an attachment member that includes a strap configured to selectively attach and tighten the wheel to the attachment member. The attachment member may include a body portion that defines a cavity configured to be received along the telescoping rail. The attachment member may include a top portion having a surface for supporting a wheel of the bike such that the surface may define a groove and includes a slot such that the strap may extend through the slot and be configured to be positioned within the groove along the surface as the wheel is positioned on the surface. The attachment member may include a second slot. The surface of the attachment member may include a plurality of teeth to provide a frictional engagement with the wheel of the bike. The attachment member may include at least one alignment peg that extends from the body. The peg may be configured to vertically stabilize the wheel along the attachment member.

In another embodiment, disclosed is a scalable bike carrier system configured to be attached to a vehicle. The scalable bike carrier system may include a first bike carrier including a hitch attachment member configured to attach the first bike carrier to the vehicle. A second bike carrier may include a support member, the support member may be configured to be selectively attached to the first bike carrier. A third bike carrier may include a support member, the support member may be configured to be selectively attached to the second bike carrier. The first bike carrier may further include a longitudinal rail with a first wheel supporting member positioned near a first end and a telescoping rail configured to be extended and retracted relative to the longitudinal rail. The telescoping rail may include a second wheel supporting member positioned at an opposite second. The support member of the second bike carrier may be configured to selectively attach to the hitch attachment member. The hitch attachment member may include a folding mechanism configured to pivot from the in-use position into the storage position.

The scalable bike carrier system may further include a retaining arm that is pivotally attached to the first bike carrier and a retaining arm that is pivotally attached to the second bike carrier. The retaining arm of the first bike carrier may include a hook wherein the retaining arm and hook may be configured to be adjusted to directly support either a bike frame or a bike wheel on the first bike carrier. Further, the retaining arm of the second bike carrier may include a hook wherein the retaining arm and hook may be configured to be adjusted to directly support either a bike frame or a bike wheel on the second bike carrier.

In one embodiment, provided is a bike carrier configured to be attached to a vehicle. The bike carrier may include a first rail having a first wheel supporting member positioned at a first end and a second rail having a second wheel supporting member positioned at a second end. The first and second rails may be telescopingly engaged. The bike carrier may include a hitch attachment member wherein at least one of the first wheel supporting member and the second wheel supporting member is an attachment member that includes a strap configured to selectively attach and tighten the wheel to the attachment member.

### DESCRIPTION OF THE DRAWINGS

FIGURE 1 is a perspective view of one embodiment of the bike carrier of the present disclosure supporting an exemplary bike in an upright position thereon;
FIGURE 2 is a top view of the bike carrier of FIGURE 1 of the present disclosure;
FIGURE 3 is a front view of the bike carrier of FIGURE 1 of the present disclosure;
FIGURE 4 is a side view of the bike carrier of FIGURE 1 of the present disclosure;
FIGURE 5 is a top view of the bike carrier of FIGURE 1 of the present disclosure;
FIGURE 6 is a side view of the bike carrier of FIGURE 1 of the present disclosure;
FIGURE 7 is a front view of the bike carrier of FIGURE 1 of the present disclosure;
FIGURE 8 is a perspective view of embodiments of a first bike carrier and a second bike carrier of the present disclosure;
FIGURE 9 is a top view of the first and second bike carriers of FIGURE 8 of the present disclosure;
FIGURE 10 is a side view of the first and second bike carriers of FIGURE 8 of the present disclosure;
FIGURE 11 is a perspective view of embodiments of the bike carriers of the present disclosure;
FIGURE 12 is a top view of the bike carriers of FIGURE 11 of the present disclosure;
FIGURE 13 is a front view of the bike carriers of FIGURE 11 of the present disclosure;
FIGURE 14 is a perspective view of the bike carrier of the present disclosure arranged in a storage position;
FIGURE 15 is a top view of the bike carrier arranged in the storage position of FIGURE 14 of the present disclosure;
FIGURE 16 is a side view of the bike carrier arranged in the storage position of FIGURE 14 of the present disclosure;
FIGURE 17 is a front view of the bike carrier arranged in the storage position of FIGURE 14 of the present disclosure;
FIGURE 18 is a perspective view of an attachment member of the present disclosure;
FIGURE 19 is a perspective view of an embodiment of the bike carrier in a use position with the attachment member of FIGURE 18; and
FIGURE 20 is a side view of embodiment of the bike carrier with the attachment member of FIGURE 18.

### DETAILED DESCRIPTION

Reference will now be made in detail to exemplary embodiments, examples of which are illustrated in the accompanying drawings. It is to be understood that other embodiments may be utilized and structural and functional changes may be made. Moreover, features of the various embodiments may be combined or altered. As such, the following description is presented by way of illustration only and should not limit in any way the various alternatives and modifications that may be made to the illustrated embodiments. In this disclosure, numerous specific details provide a thorough understanding of the subject disclosure. It should be understood that aspects of this disclosure may be practiced with other embodiments not necessarily including all aspects described herein, *etc.*

As used herein, the words "example" and "exemplary" mean an instance, or illustration. The words "example" or "exemplary" do not indicate a key or preferred aspect or embodiment. The word "or" is intended to be inclusive rather an exclusive, unless context suggests otherwise. As an example, the phrase "A employs B or C," includes any inclusive permutation (e.g., A employs B; A employs C; or A employs both B and C). As another matter, the articles "a" and "an" are generally intended to mean "one or more" unless context suggest otherwise.

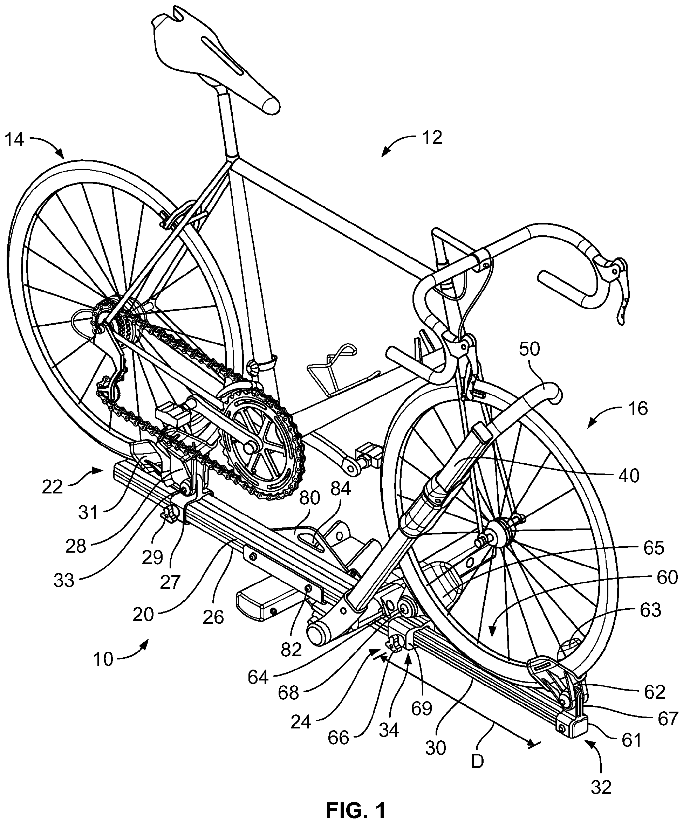

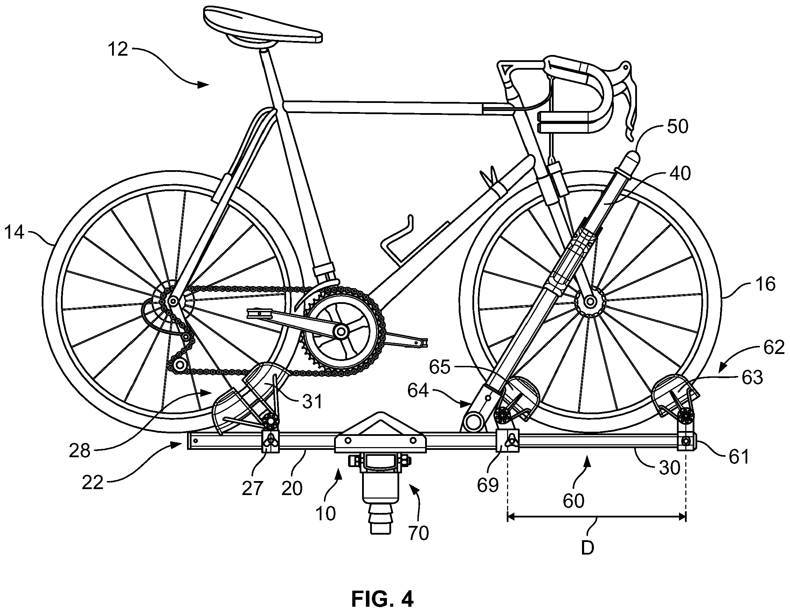

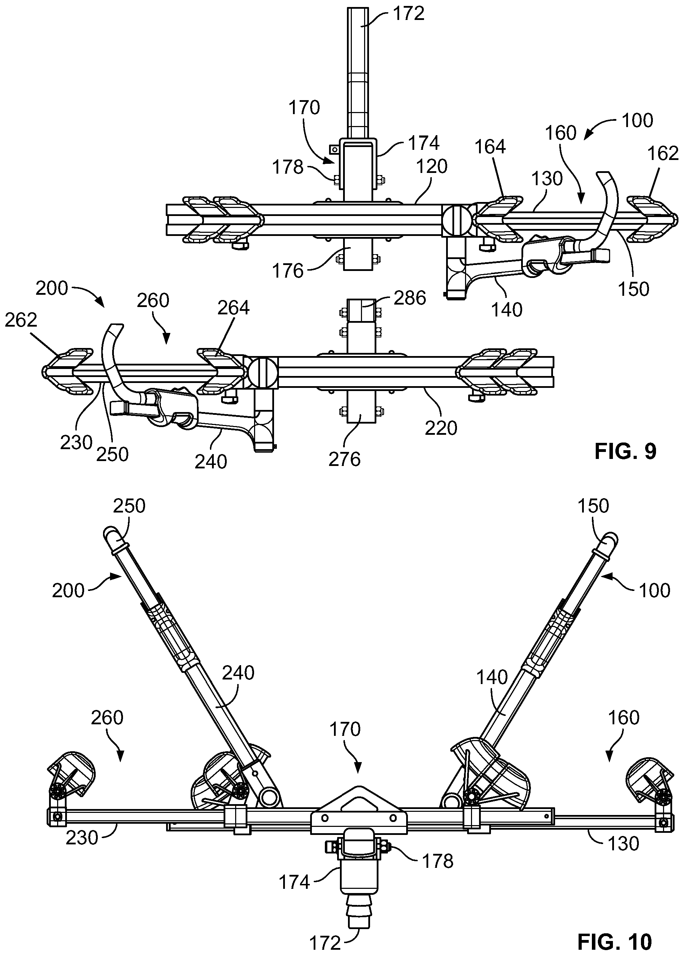

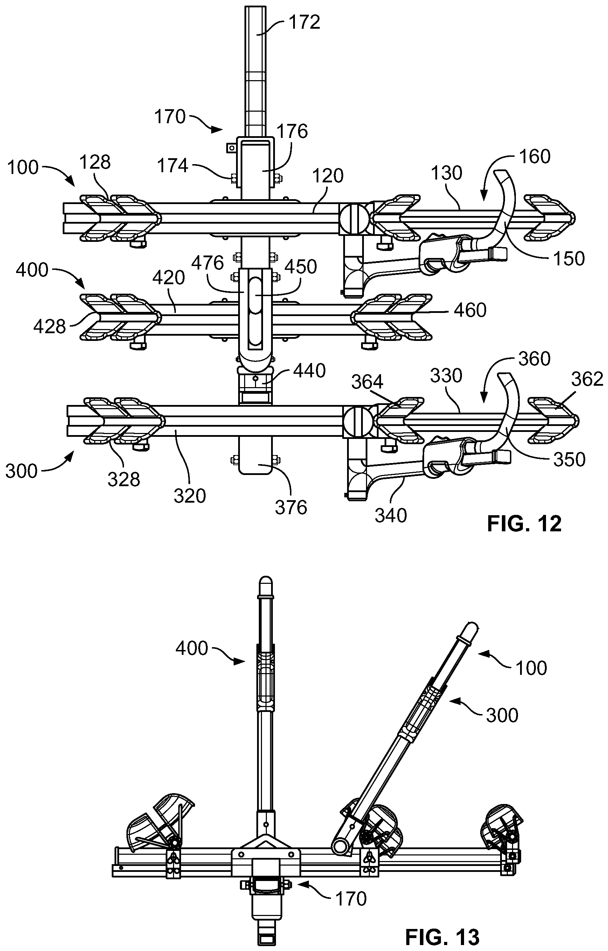

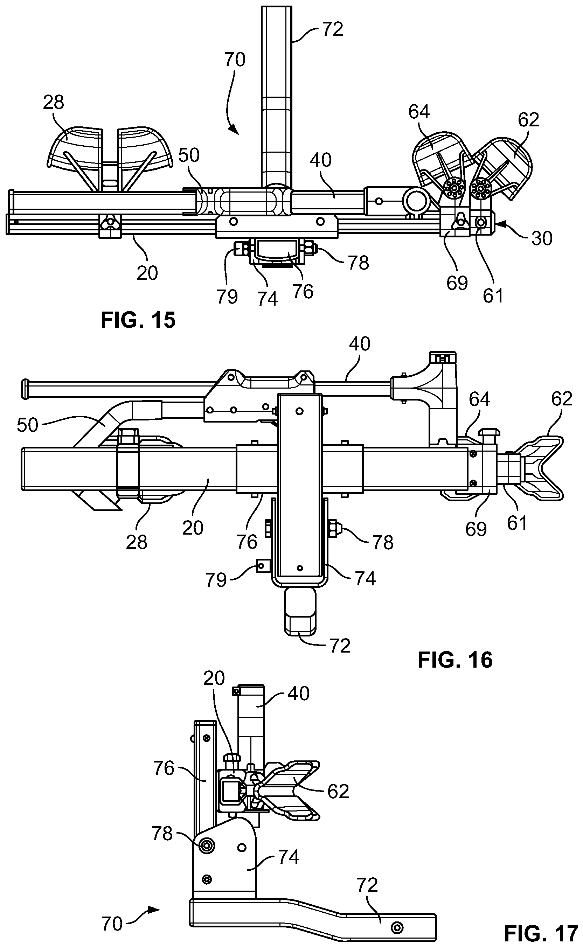

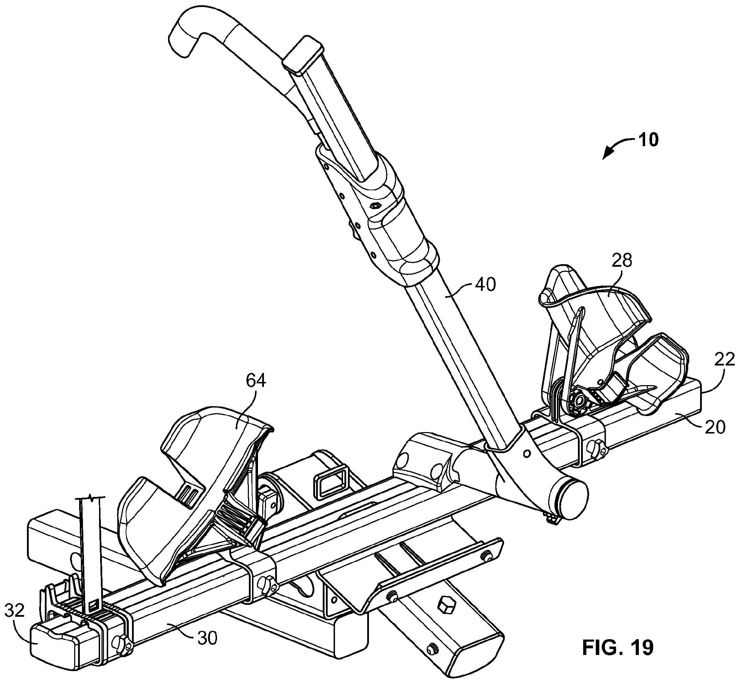

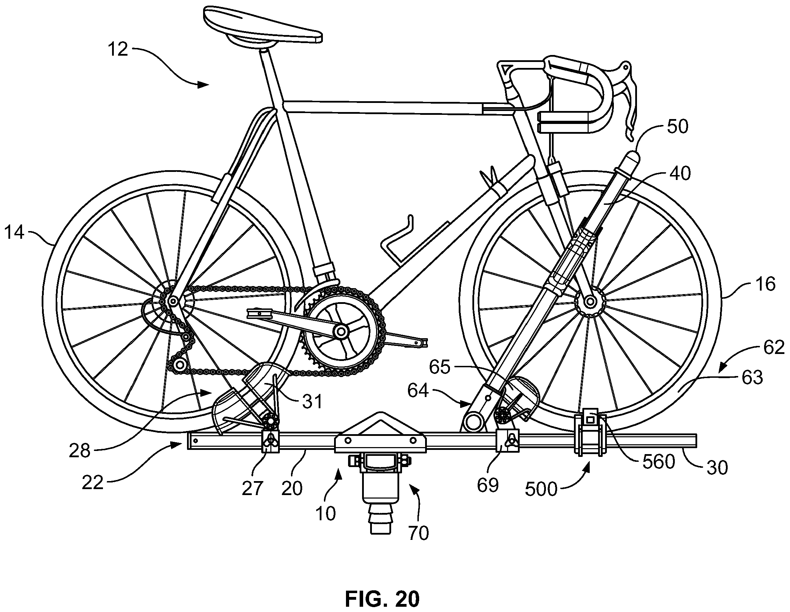

When relational terms such as "upper," "lower," "horizontal," "vertical," "top," "bottom," "side," etc. are used herein, reference is made to various embodiments of a bike carrier of the present disclosure when oriented as shown, for example, in FIGS. 1-20, it being understood that such terms are used in their relative senses and are not intended to be limiting in scope or meaning.

FIGURES 1-4 illustrates a bike carrier 10 that may include an adjustable and scalable configuration adapted to support a bike 12 thereon. The bike carrier 10 may be capable of selectively attaching to a vehicle (not shown) in any appropriate manner. The bike 12 that may be attached to the bike carrier 10 may be of any known or future developed configuration. As a means of an example, the bike 12 shown includes a rear or first wheel 14 and an opposite front or second wheel 16.

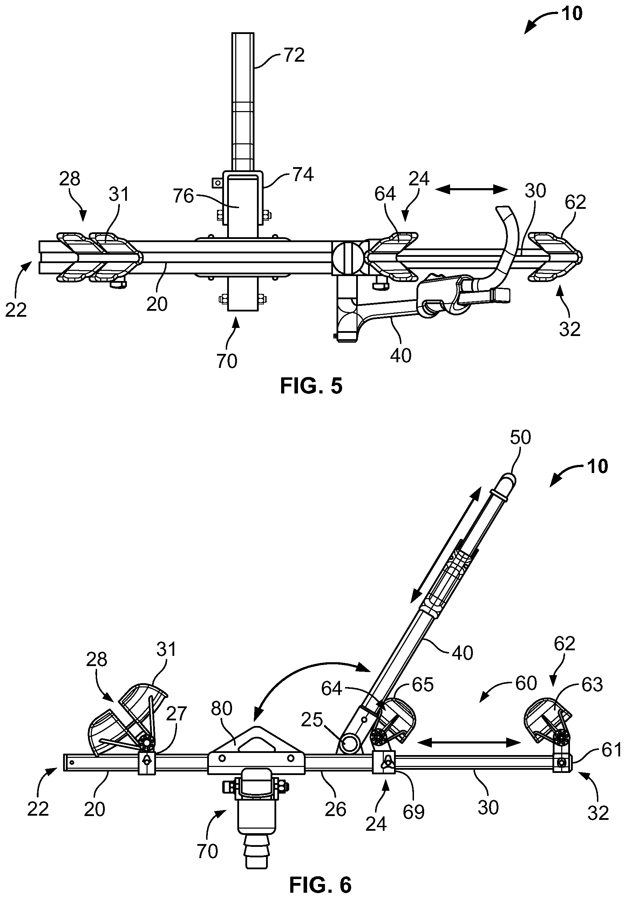

As illustrated by FIGURES 5-7, the bike carrier 10 may include a longitudinal rail 20 having attached thereto a telescoping rail 30. The longitudinal rail 20 may include a first end 22 and an opposite second end 24. A wheel supporting member 28 may be attached to the longitudinal rail 20 adjacent the first end 22 in any appropriate manner.

By way of a non-limiting example, the wheel supporting member 28 may be attached utilizing fasteners, being snap-fitted, friction fitted, welded or adhered to the longitudinal rail 10 or may be monolithically formed with the longitudinal rail 20 or a combination thereof. The wheel supporting member 28 may have a base 31. The base 31 may have a generally U-shaped cross sectional configuration for receiving and supporting a portion of the first wheel 14. Additionally, the wheel supporting member 28 may be longitudinally adjustable relative to the longitudinal rail 20 and rotatably adjustable relative to the longitudinal rail 20. The wheel supporting member 28 may be longitudinally adjustable relative to a first cradle member 62 and a second cradle member 64. In one embodiment, the wheel supporting member 28 may include a bracket 27 and fastener 29. The bracket 27 may be configured to slide along the longitudinal rail 20 and the fastener 29 may be ergonomically configured for a user to manually tighten or loosen the bracket 27 relative to the longitudinal rail 20. Additionally, the base 31 may be rotatably adjustable relative to the bracket 27 and may also include a fastener 33 configured to tighten and loosen the base 31 relative to the bracket 27.

The telescoping rail 30 may extend from the second end 24 of the longitudinal rail 20 and may be adapted to selectively extend and retract therefrom. The telescoping rail 30 may include a distal end 32 and a proximal end 34, the proximal end 34 may extend from the second end 24 of the longitudinal rail 20. It should be understood, however, that the telescoping rail 30 may also extend from the first end 22 of the longitudinal rail 24.

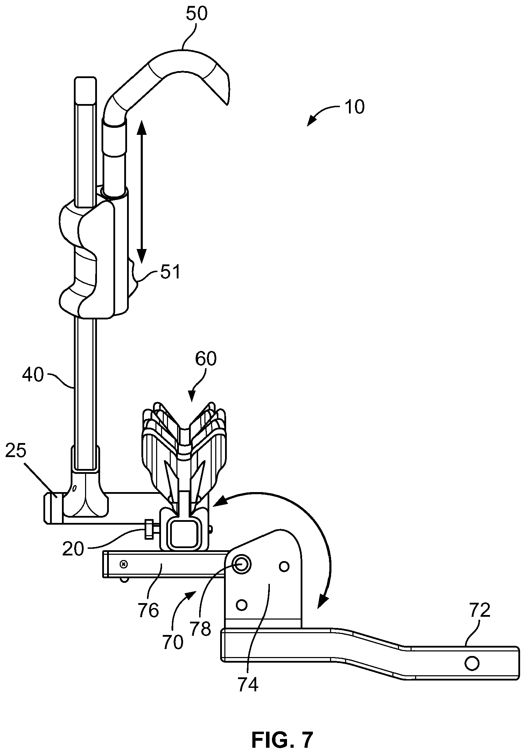

A retaining arm 40 may be pivotally arranged relative to the longitudinal rail section 20 or the telescoping rail 30 and provided with a hook member 50. The hook member 50 may be telescopingly attached to the retaining arm 40. The retaining arm 40 may be arranged so it rotates relative to the longitudinal rail 20 and/or telescoping rail 30. The retaining arm 40 may be attached to the rail 20 at a pivot base 25 positioned along the longitudinal rail 20 between the second cradle member 64 and a hitch attachment member 70. The pivot base 25 may be attached to a top side of the longitudinal rail 20 but can also be attached to a bottom side. The hook member 50 may be arranged so it extends or retracts relative to the retaining arm 40. Additionally, the hook member may include a toggle member 51 (FIGURE 7) that may selectively lock the hook member 50 in a position along the retaining arm 40.

In one embodiment, a portion of the longitudinal rail 20 and the telescoping rail 30 may form a wheel cradle 60. The wheel cradle 60 may include the telescoping rail 30 configured to extend and retract relative to the longitudinal rail 20. The telescoping rail 30 may be insertable into the longitudinal rail 20. Alternatively, the longitudinal rail 20 may be insertable into the telescoping rail 20. As illustrated for example in Figure 6, the first cradle member 62 may include a first bracket 61 and a first base 63. The first bracket 61 may be attached to the distal end 32 of the telescoping rail 30. The first base 63 may be attached to the first bracket 61 and may have a generally U-shaped cross sectional shape - although the present teachings are not limited to this specific configuration. The first base 63 may be of any appropriate cross-sectional shape, including without limitation a C-shape, V-shape, etc. The first cradle member 62 may be configured to receive a portion of a wheel of a loaded bicycle 12, such as the second wheel 16.

The second cradle member 64 may include a second bracket 69 and a second base 65. The second bracket 69 may be attached to the longitudinal rail 20. In some embodiments, the second bracket 69 may be attached to the telescoping rail 30. Alternatively, the second bracket 69 may be attached to the second end 24 of the longitudinal rail 30.

The second base 65 may have a generally U-shaped cross sectional shape and may be attached to the second bracket 69. The second base 65 may be of any appropriate cross-sectional shape, including without limitation a C-shape, V-shape, etc. The second cradle member 64 may be configured to receive a portion of the wheel of the loaded bicycle 12, such as the second wheel 16. Additionally, the second cradle member 64 may be longitudinally adjustable relative to the longitudinal rail 20 or the telescoping rail 30. In some embodiments, the second bracket 69 may include a fastener 66. The bracket 69 may be configured to slide along the longitudinal rail 20 or the telescoping rail 30 and the fastener 66 may be ergonomically configured for a user to manually tighten or loosen the bracket 69 thereon. Additionally, the first base 63 and the second base 65 may be rotatably adjustable relative to first bracket 61 and the second bracket 69, respectively. The first and second brackets 61, 69 may also includes a fastener 67, 68 configured to tighten and loosen the first base 63 and second base 65 relative to the first bracket 61 and second bracket 69, respectively. The first bracket 61 and second bracket 69 are also adjustable relative to one another.

The wheel cradle 60 may be longitudinally adjustable relative to the size of the bike wheel by extending and retracting the telescoping rail 30 relative to longitudinal rail 20. This movement may adjust a position of the first and second cradle members 62, 64 to abut against opposite portions of the second wheel 16 of the loaded bicycle 12. In some embodiments, the second bracket 69 may be attached to the second end 24 of the longitudinal rail 20 and the fastener 66 may be configured to toggle the adjusted position of the telescoping rail 30. The fastener 66 may be ergonomically configured to allow the user to easily toggle the fastener 66 in a tightened or loosened orientation relative to the telescoping rail 30, longitudinal rail 20 and the second bracket 69. Still further in some embodiments, the second cradle member 64 may be fixed relative to the longitudinal rail 20.

The wheel cradle 60 and hook member 50 on the retaining arm 40 may support the loaded bicycle 12 in an upright position on the bike carrier 10. Extending and/or retracting the telescoping rail 30 may adjust the width of the wheel cradle 60. By way of a non-limiting example, extending and/or retracing the telescoping rail 30 may adjust a distance D between the first and second cradle members 62, 64.

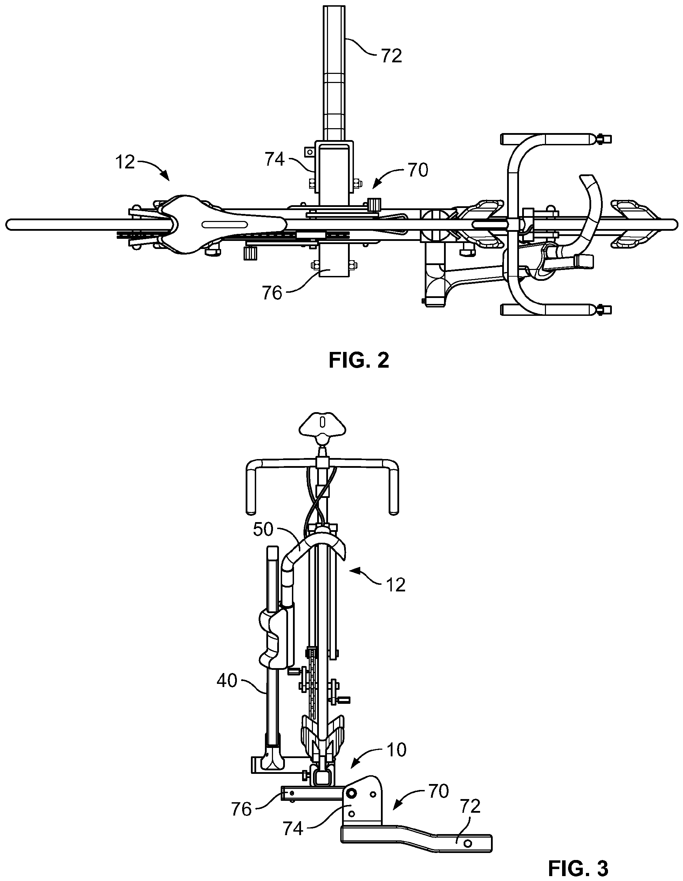

By way of a non-limiting example, the bike carrier 10 may be attached to a conventional hitch receiver attached to a rear portion of a vehicle (not shown). In this embodiment, as clearly identified by FIGURES 2, 3 and 7, the bike carrier 10 may include a hitch attachment member 70 configured to support at least one additional bike carrier such that an additional bike carrier may extend from the hitch attachment member. The hitch attachment member 70 may be a folding mechanism that includes a draw bar 72 capable of selectively attaching to the hitch receiver of the vehicle at the rear portion of the vehicle. The hitch attachment member 70 may be configured to attached to any sized vehicle hitch such as class I, II, III, or IV. The bike carrier 10 may, therefore, extend from the rear portion of the vehicle. While the bike carrier 10 is shown with a corresponding folding mechanism 70 and draw bar 72, this may be exemplary and not all-inclusive nor exclusive. Any kind of hitching system, mechanism or other means of attachment to a vehicle may be used without departing from the present teachings. Moreover, it should be appreciated that the features, components, elements and functionalities of the other embodiments may be combined or altered to achieve a desired folding mechanism for the bike carrier without departing from the spirit and scope of the present teachings.

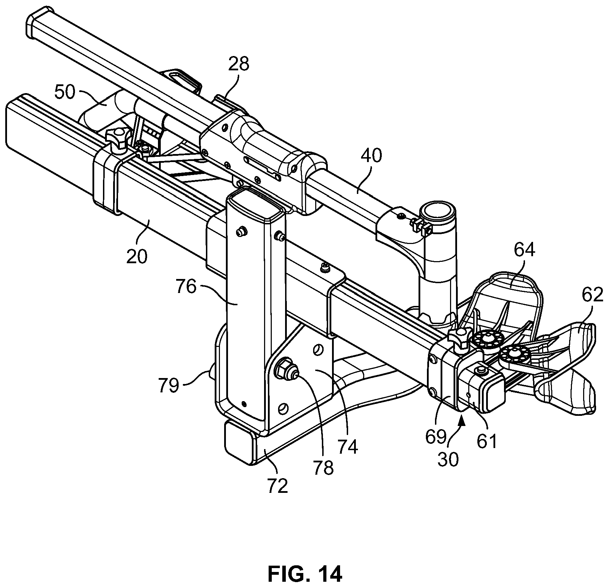

The folding mechanism of the hitch attachment member 70 may permit the bike carrier 10 to be selectively positioned between a first position and a second position. By way of a non-limiting example, the folding mechanism may include the draw arm 72 attached to a hinge member 74 and a support arm 76. The folding mechanism 70 may permit the bike carrier 10 to be selectively rotated or pivoted from a substantially horizontal position to a substantially vertical position relative to the hitch receiver, an example of the bike carrier 10 in the first horizontal position is shown in FIGURES 1-7 and an example of the bike carrier 10 in the second vertical position is shown in FIGURES 14-17.

By way of a non-limiting example, the hitch attachment member 70 may be attached to the longitudinal rail 20, and in particular may be attached to an underside 26 of the longitudinal rail 20 in any appropriate manner - including, without limitation via fasteners, welding, adhering or the like. Still further, it may be monolithically formed with the longitudinal rail 20. In one embodiment, a plate 80 may be attached between the underside 26 of the longitudinal rail 20 and the support arm 76 of the folding mechanism. The position of the longitudinal rail 20 relative to the support arm 76 may allow for a conventional bike to be balanced on the bike carrier 10 relative to the draw bar 72 as it is attached to a hitch receiver of a vehicle. The plate 80 may be shaped to generally conformed to at least a portion of a perimeter of the longitudinal rail 20 and be attached with fasteners 82. The plate 80 may include an aperture 84 located along a portion of the plate 80 that extends from the longitudinal rail 20. The aperture 84 may be of any shape that may allow the user to grasp the bike carrier 10, fold the bike carrier 10 or attach/detach the bike carrier 10 from a vehicle. It may act as a handle. Still further, in some embodiments a gripping member (not shown) may be added to assist in carrying the bike carrier 10.

The hinge member 74 of the folding mechanism may allow the support arm 76 to rotate relative to the draw bar 72 about a pivot point 78. This motion is illustrated by FIGURE 7. Additionally, the telescoping rail 30 may be slidingly adjustable relative to the longitudinal rail 20 as illustrated by FIGURES 5 and 6. Here, the telescoping rail 30 is configured to be longitudinally extended or retracted from the longitudinal rail 20. Further, the retaining arm 40 may be adapted to be rotated relative to the longitudinal rail 20 while the hook member 50 may be adapted to be extended or retracted relative to the retaining arm 40 as illustrated by FIGURE 6. The hook member 50 may be pivoted and adjusted into a position to support either the frame or the wheel of the bike onto the carrier 10. The adjustable configuration of the bike carrier 10 is configured to accommodate different sizes of wheels and frames of various bikes.

The bike carrier 10 including the longitudinal rail 20, telescoping rail 30, retaining arm 40, hook member 50 and hitch attachment member 70 may be made of any appropriate material, such as for example steel, aluminum, a composite metal or an alloy. Alternatively, the bike carrier 10 may also be made of a combination of other moldable polymer materials such as plastics, fiberglass, and the like.

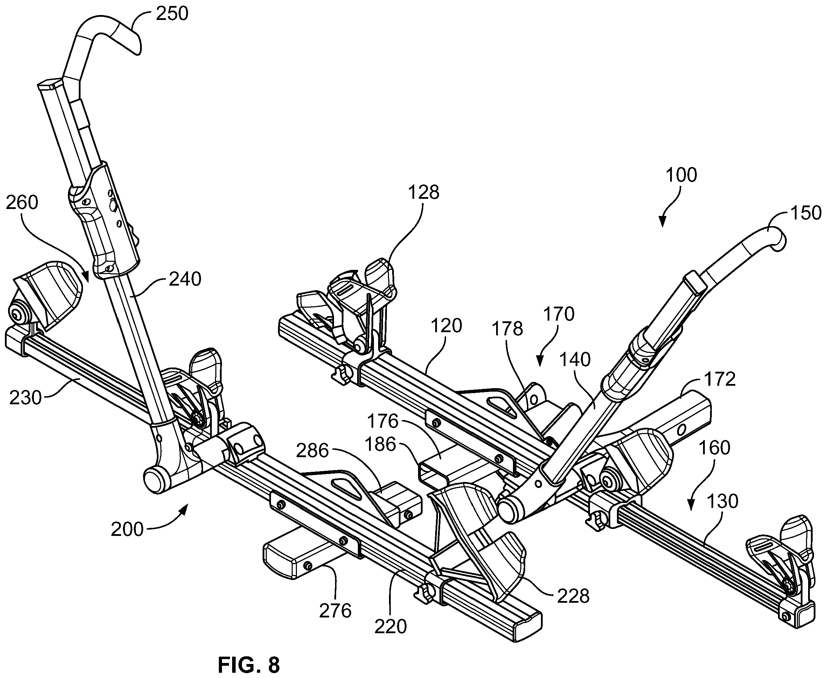

Reference will now be made in detail to the additional embodiments of the disclosure, examples of which are illustrated in the accompanying FIGURES 8-13 Wherever possible, the same or similar reference numbers are used in the these figures and the description to refer to the same or like parts. It should be noted that the drawings are in simplified form and are not to precise scale. Although the disclosure herein refers to certain illustrated embodiments, it is to be understood that these embodiments are presented by way of example and not by way of limitation. The intent of the following detailed description, although discussing exemplary embodiments, is to be construed to cover all modifications, alternatives, and equivalents of the embodiments as may fall within the spirit and scope of the disclosure as defined by the appended claims. In the descriptions, all of the details and components may not be fully described or shown. Rather, the main features or components are described and, in some instances, differences with the above-described embodiment may be pointed out. Moreover, it should be appreciated that these additional embodiments may include elements or components utilized in the above-described embodiment although not shown or described. Thus, the descriptions of these additional embodiments are merely exemplary and not all-inclusive nor exclusive.

Turning to FIGURES 8-10, disclosed is a first bike carrier 100 and a second bike carrier 200. The first bike carrier 100 may include similar features to bike carrier 10. The first bike carrier 100 may include a support arm 176 adapted to be selectively attached to a second support arm 276 of the second bike carrier 200. In the illustrated embodiment of FIGURE 8-10, the first support arm 176 may have an opening 186 configured to receive an extended portion 286 of the second support arm 276 to be selectively attached thereto. However, the structure of the selective attachment between the first bike carrier 100 and the second bike carrier 200 is not limiting.

Further, the second bike carrier 200 may be directionally opposed to the first bike carrier 100 such that the first bike carrier 100 may be configured to support a front portion of a bike at a first wheel cradle 160 positioned on the right side of FIGURE 8 while the second bike carrier 200 may be configured to support a front portion of a bike at a second wheel cradle 260 positioned on the left side of FIGURE 8.

Similarly, the first bike carrier 100 and second bike carrier 200 may include longitudinal rails 120, 220 that may be slidingly attached to telescoping rails 130, 230. Wheel support members 128, 228 may be attached to the longitudinal rails 120, 220 to support the rear wheels of the bike, respectively. The telescoping rails 130, 230 may be adapted to extend and retract relative to the longitudinal rails 120, 220, respectively.

Retaining arms 140, 240 may be pivotally arranged relative to the longitudinal rails 120, 220 and may be provided with hook members 150, 250 that may be telescopingly attached to the retaining arms 140, 240. The retaining arms 140, 240 may be arranged to be rotated relative to the longitudinal rails 120, 220. The hook members 150, 250 may be arranged to extend or retract relative to the retaining arms 140, 240, respectively. The hook member 250 may engage the frame of the bike and the hook member 150 may engage a wheel of the bike. Alternatively, the hook members 150, 250 may both engage a frame or both engage a wheel to support the bike on the carrier.

A portion of the longitudinal rails 120, 220 and the telescoping rails 130, 230 may form wheel cradles 160, 260, respectively. Similarly, the telescoping rails 130, 230 may be configured to extend and retract relative to the longitudinal rails 120, 220. This movement adjusts a position of the first and second cradle members 162, 262 and 164, 264 to abut against opposite portions of the front wheel of the loaded bicycle.

The first bike carrier 100 may be attached to a conventional hitch receiver that is attached to a rear portion of a vehicle (not shown). In this embodiment, the first bike carrier 100 may include a hitch attachment member 170. The hitch attachment member 170 may include a folding mechanism with a draw bar 172 that may be capable of selectively attaching to the hitch receiver of the vehicle at the rear portion of the vehicle. The first bike carrier 100 may, therefore, extend from the rear portion of the vehicle while the second bike carrier 200 may extend from the first bike carrier 200. While the bike carriers 100, 200 are shown with a corresponding hitch attachment member 170 and draw bar 172, this may be exemplary and not all-inclusive nor exclusive. Any kind of hitching system, mechanism or other means of attachment to a vehicle may be used without departing from the present teachings. Moreover, it should be appreciated that the features, components, elements and functionalities of the other embodiments may be combined or altered to achieve a desired folding mechanism for the bike carrier without departing from the spirit and scope of the present teachings.

The hitch attachment member 170 may be scalable as it allows for additional bike carriers to be extended therefrom. Additionally, the folding mechanism of the hitch attachment member 170 may permit the first bike carrier 100 and the second bike carrier 200 to be selectively positioned from a first position to a second position. By way of a non-limiting example, the folding mechanism may include the draw arm 172 attached to a hinge member 174 and a support arm 176. The hitch attachment member 170 may permit the first bike carrier 100 and the second bike carrier 200 to be selectively rotated or pivoted from a substantially horizontal position to a substantially vertical position relative to the hitch receiver.

In this embodiment, the hitch attachment member 170 may be attached to the longitudinal rail 120 such that the hinge member 174 of the folding mechanism allows the support arm 176 to rotate relative to the draw bar 172 about a pivot point 178.

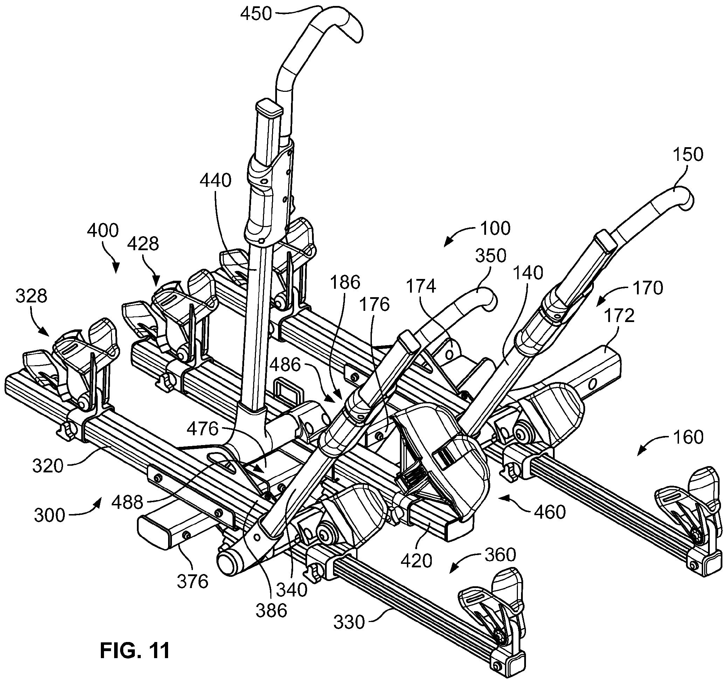

Turning to FIGURES 11-13, disclosed is a third bike carrier 300 that may be selectively attached to the first bike carrier 100 and a middle bike carrier 400. The third bike carrier 300 may include similar features to the first bike carrier 100. The third bike carrier 300 may include a support arm 376 that is adapted to be selectively attached to a middle support arm 476 of the middle bike carrier 400. In the illustrated embodiment of FIGURES 11-13, the first support arm 176 may have opening 186 that is configured to receive an extended portion 486 of the middle support arm 476 to be selectively attached thereto. Similarly, the middle support arm 476 may have an opening 488 that is configured to receive an extended portion 386 of the third support arm 376. However, the structure of the selective attachment between the first bike carrier 100, the middle bike carrier 400 and the third bike carrier 300 is not limiting. Additionally, the scalability of this disclosure is not limiting as a forth, fifth, sixth or more bike carriers may be selectively attached in a scalable manner. Similarly, the middle bike carrier 400 may be attached to the first bike carrier 100 in the same manner. In these embodiments, the middle bike carrier 400 may be selectively removed or attached from the first bike carrier 100. For example, the first bike carrier 100 may be alone in an operative position resulting in the first bike carrier 100 being able to operative hold a single bike or the middle bike carrier 400 may be selectively attached as described above utilizing the opening 186 receiving the extended portion 486 of the middle support arm 476. In this configuration two bikes may be operatively attached.

In these embodiments described above, the third bike carrier 300 may share a common directionality with the first bike carrier 100. However, this arrangement is not limiting as the first, middle, and third bike carriers may all have a common or opposing directionality as described herein.

The third bike carrier 300 may include a longitudinal rail 320 slidingly attached to a telescoping rail 330. A wheel support member 328 may be attached to the longitudinal rail 320 to support the wheel of the bike. The telescoping rail 330 may be adapted to extend and retract relative to the longitudinal rail 320.

Retaining arm 340 may be pivotally arranged relative to the longitudinal rail 320 and provided with hook member 350 that may be telescopingly attached to the retaining arm 340. The retaining arm 340 may be arranged to be rotated relative to the longitudinal rail 320. The hook member 350 may be arranged to extend or retract relative to the retaining arm 340. The hook member 350 may be pivoted and adjusted into a position to support either the frame or the wheel of the bike onto the carrier 300.

A portion of the longitudinal rail 320 and the telescoping rail 330 may form a third wheel cradle 360. Similarly, the telescoping rail 330 may be configured to extend and retract relative to the longitudinal rail 320. This movement may adjust a position of the first and second cradle members 362, 364 to abut against opposite portions of the front wheel of the loaded bicycle. The hook member 350, similar to hook member 150, may be configured to support a wheel of the bike that is positioned within the third wheel cradle 360 and a first wheel cradle 360, respectively. The hook member 350 may be pivoted and adjusted into a position to support either the frame or the wheel of the bike onto the carrier 300.

The middle bike carrier 400 may include a longitudinal rail 420 that may be attached to a first wheel support member 428 and a second wheel support member 460 to support the front and rear wheels of the bike. The first wheel support member 428 and second wheel support member 460 may be longitudinally adjustable and rotationally adjustable relative to the longitudinal rail 420. These support members 428, 460 may include a generally U-shaped cross sectional configuration adapted to receive the wheels of the bike.

In this embodiment, a middle retaining arm 440 may be pivotally arranged relative to the longitudinal rail 420 and provided with hook member 450 that may be telescopingly attached to the middle retaining arm 440. The retaining arm 440 may be arranged to be rotated relative to the longitudinal rail 420. The hook member 450 may be arranged to extend or retract relative to the retaining arm 440. The middle hook member 450 may be configured to support a frame portion of the bike that is positioned between the first wheel support member 428 and the second wheel support member 460 along the longitudinal rail 420. In one embodiment, the middle retaining arm 440 may pivot between the first wheel support member 428 and the second wheel support member 460 relative to the longitudinal rail 420 to ensure that the user utilizes the middle retaining arm 440 to support a frame portion of the loaded bike.

The first bike carrier 100 may be attached to a conventional hitch receiver attached to a rear portion of a vehicle (not shown). In this embodiment, the first bike carrier 100 may include the folding mechanism 170 with a draw bar 172 capable of selectively attaching to the hitch receiver of the vehicle at the rear portion of the vehicle. The first bike carrier 100 may, therefore, extend from the rear portion of the vehicle while the middle bike carrier 400 may extend from the first bike carrier 100 and the third bike carrier 300 may extend from the middle bike carrier 400. While the bike carriers 100, 300, 400 are shown with a corresponding folding mechanism 170 and draw bar 172, this may be exemplary and not all-inclusive nor exclusive. Any kind of hitching system, mechanism or other means of attachment to a vehicle may be used without departing from the present teachings. Moreover, it should be appreciated that the features, components, elements and functionalities of the other embodiments may be combined or altered to achieve a desired folding mechanism for the bike carrier without departing from the spirit and scope of the present teachings.

The folding mechanism 170 may permit the first bike carrier 100, the middle bike carrier 400 and the third bike carrier 300 to be selectively positioned from a first position to a second position. By way of a non-limiting example, the folding mechanism 170 includes the draw arm 172 attached to the hinge member 174 and the support arm 176. The folding mechanism 170 may permit the first bike carrier 100, middle bike carrier 400 and the third bike carrier 300 to be selectively rotated or pivoted from a substantially horizontal position to a substantially vertical position relative to the hitch receiver.

As illustrated by FIGURES 14 - 17, the bike carrier 10 may be configured in the second or storage position. In this embodiment, by way of a non-limiting example, the support arm 76 of the folding mechanism 70 is pivoted into a generally vertical position as it is pivoted about the pivot point 78 of the hinge member 74. The retaining arm 40 may be pivoted into a position that is generally aligned with the longitudinal rail 20 and the hook member 50 may be retracted to a storage position along the retaining arm 40. Additionally, the telescoping rail 20 may be retracted within the longitudinal rail 30. Additionally, the wheel supporting member 28 may be rotated relative to the longitudinal rail 20 to allow the hook member 50 to be positioned adjacent thereto. Further, the fist and second cradle members 62, 64 may be rotated relative to the first and second brackets 61, 69, respectively such that the first bracket 61 abuts against the second bracket 69 in a compact storage arrangement. Additionally, there may be a pin 79 that may selectively lock the support arm 76 in the first or second position within the hinge member 74.

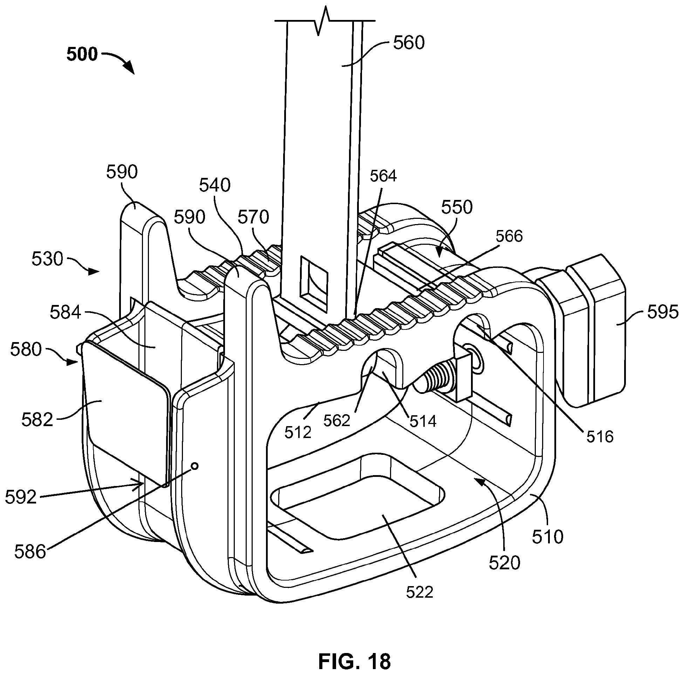

Figures 18-20 illustrate an attachment member 500 that is configured to be attached to the stationary or telescoping rails of any embodiment of the disclosed bike carriers 10, 100, 200, 300, 400. The attachment member 500 will be particularly described with reference to the bike carrier 10. The attachment member 500 may include a body portion 510 that defines a cavity 520. The body portion 510 may be a continuous member that defines the cavity 520 or may be separate pieces attached to one another. The cavity 520 may be configured to be received along the telescoping rail 30 of the bike carrier 10 and may be selectively positionable thereon. The body portion 510 may generally surround a perimeter of the telescoping rail 30 such that the attachment member 500 may be slidably adjustable along the rail 30. Additionally, the cavity 520 may be configured to be received along the longitudinal rail 20 as it may be alternatively used to attach either wheel 14, 16 to the bike carrier 10. More that one attachment member 500 may be positioned along the rails 20, 30 of the bike carrier 10. Additionally, the attachment member 500 may be rigidly attached to the rails 20, 30. In one embodiment, the attachment member 500 is attached to the distal end 32 of the telescoping rail 30 wherein at least the first cradle member 62 is removed from the telescoping rail 30. Optionally, the first cradle member 62 or the second cradle member 64 may remain on the bike carrier 10 in addition to the attachment member 500.

Particularly, the attachment member 500 includes a top portion 530 having a surface 540 that defines a groove 550. A strap 560 may be attached to the attachment member 500 and extend therefrom. The strap 560 may include a termination end 562 and may extend through a slot 564 positioned along the top portion 530 such that the strap 560 extends through the surface 540. The slot 564 may be within the groove 550 along the surface 540. Additionally, a second slot 566 may exist along the top portion 530 of the attachment member 500 wherein the strap 560 may optionally extend through either the slot 564 or second slot 566.

The strap 560 may be configured to wrap around a portion of the bike wheel 16 and selectively attach and tighten the wheel to the body 510 of the attachment member 500. The surface 540 may include a plurality of teeth or ridges 570 to provide a frictional engagement with the wheel 16. The teeth 570 may be positioned along either side of the groove 550 and extend from the top portion 530 such that a portion of the strap 560 may be positioned within the groove 550 while the wheel is positioned along the teeth 570. In one embodiment, the teeth 570 may extend from the top portion 530 of the attachment member 500 a dimension that is greater than or equal to the thickness of the strap 560 to allow a portion adjacent the termination end 562 of the strap 560 to be within the groove 550 and under a portion of the wheel 16.

The termination end 562 may be a generally rigid body that is configured to abut against a cavity surface 512. The cavity surface 512 may include a depression 514 that is in alignment with the slot 564 to retain the strap 560 in place. Similarly, a second depression 516 may be positioned along the cavity surface 512 and aligned with the second slot 566 to optionally retain the strap 560 in place. The body 510 of the attachment member 500 may include an aperture 522 to allow the strap 560 to be received therein such that the termination end 562 may be positioned against the cavity surface 512 and retained thereon.

A portion of the strap 560, opposite from the termination end 562 may be received within a locking member 580 to selectively lock the strap 500 in place relative to the body 510. The locking member 580 may include a lock arm 582 that is configured to be selectively opened to receive the strap 560 within a receiving groove 584 and be selectively closed to lock the strap 560 in place as desired. The lock arm 582 may pivot about a pivot hinge 586 and include a biasing member 592 such that the lock arm 582 may be spring loaded.

The attachment member 500 may include a plurality of alignment pegs 590 that extend from the top portion 530 of the body 510. The pegs 590 may extend upwardly from the top portion 530 and be positioned on either side of the groove 550 between the slot 564 and the locking member 580. The pegs 590 may be generally aligned along the top surface 540 and be positioned along an opposite side of the wheel 16 than the strap 560 as it extends through the slots 564, 566. The strap 560 may be configured to fit between the pegs 590 as the strap 560 is wrapped around the wheel 16 while the wheel is positioned along the surface 540 of the top portion 530 of the attachment member 500. As the strap 560 is tightened around the wheel 16, the wheel may be pressed against the pegs 590 to vertically stabilize the wheel 16 along the attachment member 500. The strap 560 may extend through the slot 564 while the strap 560 pulls the wheel towards the pegs 590 with greater force than when the strap 560 extends from the second slot 566.

Additionally, the attachment member 500 may be longitudinally adjustable relative to the longitudinal rail 20 or the telescoping rail 30. In some embodiments, the attachment member 500 may include a fastener 595. The attachment member 500 may be configured to slide along the longitudinal rail 20 or the telescoping rail 30 and the fastener 595 may be ergonomically configured for a user to manually tighten or loosen the fastener 595 to position the attachment member 500 thereon. The fastener 595 may be any type of fastening device that is known in the art and this disclosure is not limited. The fastener 595 may be a screw and nut configuration wherein the nut may be received within a contour of the telescoping rail such that once the fastener 595 is rotated that nut may bring the surface of the rail in close frictional abutment with the cavity surface 512 along the cavity 520 of the body 510 or may create space between the surface of the rail and the cavity surface 512 along the cavity 520 of the body 510.

In one embodiment, the position of the attachment member 500 may be longitudinally adjustable by extending and retracting the telescoping rail 30 relative to longitudinal rail 20. This movement may adjust a position of attachment member 500 to abut against a bottom portion of the wheel 16 of the loaded bicycle 12. In one embodiment, the second cradle member 64 may be attached to the second end 24 of the longitudinal rail 20 and the fastener 66 may be configured to toggle the adjusted position of the telescoping rail 30. Optionally, the second cradle member 64 may be fixed relative to the longitudinal rail 20 or it may be removed.

## Claims

1. A bike carrier (10) configured to be attached to a vehicle comprising:
a longitudinal rail (20) having a first wheel supporting member (28) positioned at a first end (22);
a telescopic rail (30), the longitudinal and telescopic rails (20, 30) telescopingly engaged;
a wheel cradle (60) having a first cradle member (62) attached to the telescopic rail (30) and a second cradle member (64) attached to the longitudinal rail (20) wherein the first cradle member (62) is longitudinally adjustable relative to the second cradle member (64) by extending and retracting the longitudinal rail (20) relative to the telescopic rail (30); and
a hitch attachment member (70) wherein the longitudinal rail (20) and telescopic rail (30) are configured to support a bike (12).

2. The bike carrier (10) of claim 1, wherein the hitch attachment member (70) is configured to be scalable and support at least one additional bike carrier (200, 300) such that the additional bike carrier (200, 300) extends from the hitch attachment member (70) and is configured to support a second bike.

3. The bike carrier (10) of claim 1 further comprising a retaining arm (40) pivotally arranged relative to the longitudinal rail section and includes a hook member (50) that is telescopingly attached to the retaining arm (40), wherein the retaining arm (40) is configured to pivot between a support position and a release position and the hook member (50) is configured to be extended or retracted into a position abutted against the bike (12) when the bike (12) is supported by the bike carrier (10).

4. The bike carrier (10) of any one of claimsl to 3, wherein the first cradle member (62) includes a generally U-shaped cross section and is configured to receive a portion of the wheel (16) of the bike (12) and the second cradle member (64) has a generally U-shaped cross section and is configured to receive a portion of the wheel (16) of the bike (12).

5. The bike carrier (10) of claim 1, wherein the hitch attachment member (70) includes a folding mechanism, the folding mechanism includes a draw bar (72) configured to be selectively attached to the hitch receiver and secured to the vehicle wherein the folding mechanism is configured to tilt the bike carrier (10) from an in-use position to a storage position.

6. The bike carrier (10) of claim 5, wherein the folding mechanism includes a support arm (76) that is configured to support additional bike carriers in a scalable arrangement such that a plurality of bike carriers can extend from the hitch attachment member (70) and tilt from the in-use position into the storage position.

7. The bike carrier (10) of claim 1, wherein the second rail member (200) includes a support arm (276) configured to be attached to the hitch attachment member (70) and wherein a third rail member (300) includes a support arm (376) configured to be attached to the support arm (276) of the second rail member (200).

8. The bike carrier (10) of claim 1, wherein at least one of the first wheel supporting member (28) and the second wheel supporting member is an attachment member (500) that includes a strap (560) configured to selectively attach and tighten the wheel (16) to the attachment member (500).

9. The bike carrier (10) of claim 8, wherein the attachment member (500) includes a body portion (510) that defines a cavity (520) configured to be received along the telescoping rail (30), the attachment member (500) includes a top portion (530) having a surface (540) for supporting a wheel (16) of the bike (12), the surface (540) defines a groove (550) and includes a slot (564) such that the strap (560) extends through the slot (564) and is configured to be positioned within the groove (550) along the surface (540) as the wheel (16) is positioned on the surface (540).

10. The bike carrier (10) of claim 8 or 9, wherein the attachment member (500) includes a second slot (566).

11. The bike carrier (10) of claim 9 or 10, wherein the surface (540) of the attachment member (500) includes a plurality of teeth (570) to provide a frictional engagement with the wheel (16) of the bike (12).

12. The bike carrier (10) of any one of claim 8 to 11, wherein the attachment member (500) includes at least one alignment peg (590) that extends from the body (510), the peg (590) configured to vertically stabilize the wheel (16) along the attachment member (500).

13. A bike carrier (10) of claim 9, wherein a portion of said strap (560) is positioned within the groove (550) when attached to the wheel (16).

14. The bike carrier (10) of claim 24, wherein the attachment member (500) includes a body portion (510) that defines a cavity (520) configured to be received along the second rail (30), the attachment member (500) includes a slot such that the strap extends through the slot and is configured to be positioned within the groove along the surface as the wheel is positioned on the surface.

15. The bike carrier (10) of any of the preceding claims, wherein
the first cradle member (62) further comprises:
a first bracket (61) and a first base (63) wherein the first base (63) is rotatably adjustable relative to the first bracket (61); and
the second cradle member (64) further comprises:
a second bracket (69) and a second base (65) wherein the second base (65) is rotatably adjustable relative to the second bracket (69); and
wherein the first bracket abuts the second bracket in a compact storage arrangement.

## Patentansprüche

1. Fahrradträger (10), der ausgestaltet ist, an einem Fahrzeug befestigt zu sein, umfassend:
eine Längsschiene (20), die ein erstes Radträgerelement (28) aufweist, das an einem ersten Ende (22) positioniert ist;
eine Teleskopschiene (30), wobei die Längs- und Teleskopschiene (20, 30) teleskopartig in Eingriff stehen;
eine Radgabel (60), die ein erstes Gabelelement (62) aufweist, das an der Teleskopschiene (30) befestigt ist und ein zweites Gabelelement (64), das an der Längsschiene (20) befestigt ist, wobei das erste Gabelelement (62) längenverstellbar im Verhältnis zum zweiten Gabelelement (64) ist, und zwar durch Ausfahren und Einfahren der Längsschiene (20) im Verhältnis zur Teleskopschiene (30); und
ein Anbaubefestigungselement (70), wobei die Längsschiene (20) und die Teleskopschiene (30) ausgestaltet sind, ein Fahrrad (12) zu tragen.

2. Fahrradträger (10) nach Anspruch 1, wobei das Anbaubefestigungselement (70) ausgestaltet ist, skalierbar zu sein und mindestens einen zusätzlichen Fahrradträger (200, 300) zu tragen, sodass der zusätzliche Fahrradträger (200, 300) sich von dem Anbaubefestigungselement (70) erstreckt und ausgestaltet ist, ein zweites Fahrrad zu tragen.

3. Fahrradträger (10) nach Anspruch 1, überdies umfassend einen Haltearm (40), der im Verhältnis zum Längsschienenabschnitt schwenkbar angeordnet ist und ein Hakenelement (50) umfasst, das teleskopartig an dem Haltearm (40) befestigt ist, wobei der Haltearm (40) ausgestaltet ist, zwischen einer Trageposition und einer Freigabeposition zu schwenken, und das Hakenelement (50) ausgestaltet ist, in eine Position ausgefahren oder eingefahren zu werden, die an dem Fahrrad (12) anliegt, wenn das Fahrrad (12) von dem Fahrradträger (10) getragen wird.

4. Fahrradträger (10) nach einem beliebigen der Ansprüche 1 bis 3, wobei das erste Gabelelement (62) einen allgemein U-förmigen Querschnitt umfasst und ausgestaltet ist, einen Abschnitt des Rads (16) des Fahrrads (12) aufzunehmen und das zweite Gabelelement (64) einen allgemein U-förmigen Querschnitt aufweist und ausgestaltet ist, einen Abschnitt des Rads (16) des Fahrrads (12) aufzunehmen.

5. Fahrradträger (10) nach Anspruch 1, wobei das Anbaubefestigungselement (70) einen Klappmechanismus umfasst, und der Klappmechanismus eine Zugstange (72) umfasst, die ausgestaltet ist, selektiv an der Anbauaufhahme befestigt zu sein und am Fahrzeug befestigt zu sein, wobei der Klappmechanismus ausgestaltet ist, den Fahrradträger (10) von einer Gebrauchsposition in eine Lagerposition zu neigen.

6. Fahrradträger (10) nach Anspruch 5, wobei der Klappmechanismus einen Trägerarm (76) umfasst, der ausgestaltet ist, zusätzliche Fahrradträger in einer skalierbaren Anordnung zu tragen, sodass sich eine Vielzahl von Fahrradträgern von dem Anbaubefestigungselement (70) erstrecken und von der Gebrauchsposition in die Lagerposition neigen können.

7. Fahrradträger (10) nach Anspruch 1, wobei das zweite Schienenelement (200) einen Trägerarm (276) umfasst, der ausgestaltet ist, an dem Anbaubefestigungselement (70) befestigt zu sein, und wobei ein drittes Schienenelement (300) einen Trägerarm (376) umfasst, der ausgestaltet ist, an dem Trägerarm (276) des zweiten Schienenelements (200) befestigt zu sein.

8. Fahrradträger (10) nach Anspruch 1, wobei mindestens eines, das erste Radträgerelement (28) oder das zweite Radträgerelement, ein Befestigungselement (500) ist, das einen Riemen (560) umfasst, der ausgestaltet ist, selektiv das Rad (16) an dem Befestigungselement (500) zu befestigen und festzuziehen.

9. Fahrradträger (10) nach Anspruch 8, wobei das Befestigungselement (500) einen Körperabschnitt (510) umfasst, der einen Hohlraum (520) bestimmt, der ausgestaltet ist, entlang der Teleskopschiene (30) aufgenommen zu werden, wobei das Befestigungselement (500) einen oberen Abschnitt (530) umfasst, der eine Oberfläche (540) zum Tragen eines Rads (16) des Fahrrads (12) aufweist, wobei die Oberfläche (540) eine Nut (550) bestimmt und einen Schlitz (564) umfasst, sodass der Riemen (560) sich durch den Schlitz (564) erstreckt und ausgestaltet ist, innerhalb der Nut (550) entlang der Oberfläche (540) positioniert zu sein, wenn das Rad (16) auf der Oberfläche (540) positioniert ist.

10. Fahrradträger (10) nach Anspruch 8 oder 9, wobei das Befestigungselement (500) einen zweiten Schlitz (566) umfasst.

11. Fahrradträger (10) nach Anspruch 9 oder 10, wobei die Oberfläche (540) des Befestigungselements (500) eine Vielzahl an Zähnen (570) umfasst, um einen Reibungseingriff mit dem Rad (16) des Fahrrads (12) vorzusehen.

12. Fahrradträger (10) nach einem beliebigen der Ansprüche 8 bis 11, wobei das Befestigungselement (500) mindestens einen Ausrichtungszapfen (590) umfasst, der sich von dem Körper (510) erstreckt, wobei der Zapfen (590) ausgestaltet ist, das Rad (16) vertikal entlang des Befestigungselements (500) zu stabilisieren.

13. Fahrradträger (10) nach Anspruch 9, wobei ein Abschnitt des Riemens (560) innerhalb der Nut (550) positioniert ist, wenn er an dem Rad (16) befestigt ist.

14. Fahrradträger (10) nach Anspruch 24, wobei das Befestigungselement (500) einen Körperabschnitt (510) umfasst, der einen Hohlraum (520) bestimmt, der ausgestaltet ist, entlang der zweiten Schiene (30) aufgenommen zu werden, wobei das Befestigungselement (500) einen Schlitz umfasst, sodass sich der Riemen durch den Schlitz erstreckt und ausgestaltet ist, innerhalb der Nut entlang der Oberfläche positioniert zu sein, wenn das Rad auf der Oberfläche positioniert ist.

15. Fahrradträger (10) nach einem beliebigen der vorhergehenden Ansprüche, wobei das erste Gabelelement (62) überdies Folgendes umfasst:
eine erste Halterung (61) und eine erste Basis (63), wobei die erste Basis (63) im Verhältnis zur ersten Halterung (61) drehverstellbar ist; und
das zweite Gabelelement (64) überdies Folgendes umfasst:
eine zweite Halterung (69) und eine zweite Basis (65), wobei die zweite Basis (65) im Verhältnis zur zweiten Halterung (69) drehverstellbar ist; und
wobei die erste Halterung in einer kompakten Lageranordnung an der zweiten Halterung anliegt.

## Revendications

1. Porte-vélo (10) conçu pour être attaché à un véhicule comportant :
un rail longitudinal (20) ayant un premier élément support de roue (28) positionné au niveau d'une première extrémité (22) ;
un rail télescopique (30), les rails longitudinal et télescopique (20, 30) étant en prise télescopique ;
un socle de roue (60) ayant un premier élément socle (62) attaché au rail télescopique (30) et un second élément socle (64) attaché au rail longitudinal (20), dans lequel le premier élément socle (62) est ajustable au plan longitudinal par rapport au second élément socle (64) par extension et rétraction du rail longitudinal (20) par rapport au rail télescopique (30) ; et
un élément attache d'attelage (70), dans lequel le rail longitudinal (20) et le rail télescopique (30) sont conçus pour supporter un vélo (12).

2. Porte-vélo (10) selon la revendication 1, dans lequel l'élément attache d'attelage (70) est conçu pour être évolutif et supporter au moins un porte-vélo supplémentaire (200, 300), de sorte que le porte-vélo supplémentaire (200, 300) s'étende à partir de l'élément attache d'attelage (70) et soit conçu pour supporter un second vélo.

3. Porte-vélo (10) selon la revendication 1, comportant en outre un bras de retenue (40) agencé pivotant par rapport à la section de rail longitudinal et qui inclut un élément crochet (50) qui est attaché de façon télescopique au bras de retenue (40), dans lequel le bras de retenue (40) est conçu pour pivoter entre une position de support et une position de libération et l'élément crochet (50) est conçu pour être étendu ou rétracté dans une position mise en butée contre le vélo (12) lorsque le vélo (12) est supporté par le porte-vélo (10).

4. Porte-vélo (10) selon l'une quelconque des revendications 1 à 3, dans lequel le premier élément socle (62) inclut une section transversale généralement en forme de U et est conçu pour recevoir une portion de la roue (16) du vélo (12) et le second élément socle (64) a une section transversale généralement en forme de U et est conçu pour recevoir une portion de la roue (16) du vélo (12).

5. Porte-vélo (10) selon la revendication 1, dans lequel l'élément attache d'attelage (70) inclut un mécanisme de pliage, le mécanisme de pliage inclut une barre d'attelage (72) conçue pour être attachée de façon sélective au récepteur d'attelage et fixée au véhicule, dans lequel le mécanisme de pliage est conçu pour incliner le porte-vélo (10), d'une position en cours d'utilisation vers une position de rangement.

6. Porte-vélo (10) selon la revendication 5, dans lequel le mécanisme de pliage inclut un bras de support (76) qui est conçu pour supporter des porte-vélos supplémentaires dans un agencement évolutif, de sorte qu'une pluralité de porte-vélos puissent s'étendre à partir de l'élément attache d'attelage (70) et s'incliner, de la position en cours d'utilisation vers la position de rangement.

7. Porte-vélo (10) selon la revendication 1, dans lequel le deuxième élément rail (200) inclut un bras de support (276) conçu pour être attaché à l'élément attache d'attelage (70) et dans lequel un troisième élément rail (300) inclut un bras de support (376) conçu pour être attaché au bras de support (276) du deuxième élément rail (200).

8. Porte-vélo (10) selon la revendication 1, dans lequel au moins un élément parmi le premier élément support de roue (28) et le second élément support de roue est un élément d'attache (500) qui inclut une sangle (560) conçue pour attacher et serrer sélectivement la roue (16) à l'élément d'attache (500).

9. Porte-vélo (10) selon la revendication 8, dans lequel l'élément d'attache (500) inclut une portion de corps (510) qui définit une cavité (520) conçue pour être reçue le long d'un rail télescopique (30), l'élément d'attache (500) inclut une portion de dessus (530) ayant une surface (540) afin de supporter une roue (16) du vélo (12), la surface (540) définit une rainure (550) et inclut une fente (564) de sorte que la sangle (560) s'étende à travers la fente (564) et soit conçue pour être positionnée au sein de la rainure (550) le long de la surface (540) tandis que la roue (16) est positionnée sur la surface (540).

10. Porte-vélo (10) selon la revendication 8 ou 9, dans lequel l'élément d'attache (500) inclut une seconde fente (566).

11. Porte-vélo (10) selon la revendication 9 ou 10, dans lequel la surface (540) de l'élément d'attache (500) inclut une pluralité de dents (570) pour fournir une mise en prise par frottement avec la roue (16) du vélo (12).

12. Porte-vélo (10) selon l'une quelconque des revendications 8 à 11, dans lequel l'élément d'attache (500) inclut au moins une cheville (590) d'alignement qui s'étend à partir du corps (510), la cheville (590) étant conçue pour stabiliser verticalement la roue (16) le long de l'élément d'attache (500).

13. Porte-vélo (10) selon la revendication 9, dans lequel une portion de ladite sangle (560) est positionnée au sein de la rainure (550) lorsqu'elle est attachée à la roue (16).

14. Porte-vélo (10) selon la revendication 24, dans lequel l'élément d'attache (500) inclut une portion de corps (510) qui définit une cavité (520) conçue pour être reçue le long du second rail (30), l'élément d'attache (500) inclut une fente de sorte que la sangle s'étende à travers la fente et est conçu pour être positionné au sein de la rainure le long de la surface tandis que la roue est positionnée sur la surface.

15. Porte-vélo (10) selon l'une quelconque des revendications qui précèdent, dans lequel
le premier élément socle (62) comporte en outre :
un premier palier (61) et une première base (63), dans lequel la première base (63) est ajustable en rotation par rapport au premier palier (61) ; et
le second élément socle (64) comporte en outre :
un second palier (69) et une seconde base (65), dans lequel la seconde base (65) est ajustable en rotation par rapport au second palier (69) ; et
dans lequel le premier palier bute contre le second palier dans un agencement de rangement compact.
